(19) Europäisches Patentamt

European Patent Office

Office européen des brevets

(11) Veröffentlichungsnummer: **0 226 940 B1**

(12) **EUROPÄISCHE PATENTSCHRIFT**

(45) Veröffentlichungstag der Patentschrift: **08.04.92**

(51) Int. Cl.⁵: **B29C 61/06**, H02G 15/18

(21) Anmeldenummer: **86117158.5**

(22) Anmeldetag: **09.12.86**

(54) **Schrumpfbare Kabelmuffe.**

(30) Priorität: **12.12.85 DE 3543930**

(43) Veröffentlichungstag der Anmeldung:
**01.07.87 Patentblatt 87/27**

(45) Bekanntmachung des Hinweises auf die
Patenterteilung:
**08.04.92 Patentblatt 92/15**

(84) Benannte Vertragsstaaten:
**AT BE CH DE FR GB IT LI NL SE**

(56) Entgegenhaltungen:
EP-A- 0 025 691      EP-A- 0 034 042
EP-A- 0 117 026      EP-A- 0 120 475
EP-A- 0 194 040      CH-A- 490 180
DE-A- 3 026 123      DE-A- 3 417 907
DE-U- 8 312 426      GB-A- 1 604 380
US-A- 4 402 777

(73) Patentinhaber: **RXS Schrumpftechnik-
Garnituren GmbH
Profilstrasse 4
W-5800 Hagen 1(DE)**

(72) Erfinder: **Meltsch, Hans-Jürgen, Ing.(grad)
Im Wietloh 18 A
W-5840 Schwerte-Ergste(DE)**

(74) Vertreter: **Fuchs, Franz-Josef, Dr.-Ing. et al
Postfach 22 13 17
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine schrumpfbare Kabelmuffe, bestehend aus einer schrumpfbaren Hülle und einer inneren Kabelmuffeneinlage, die aus mehreren Schichten gebildet ist.

Bei schrumpfbaren Kabelmuffen werden bisher Schutzeinlagen verwendet, die meist aus mehreren übereinander liegenden Schichten bestehen und die an den Enden anpassungsfähige Ausbildungen zum Ausgleich von Durchmesserunterschieden aufweisen. Eine derartige Schutzeinlage ist zum Beispiel aus der europäischen Patentschrift 0 025 691 bekannt. Diese Schutzeinlagen besitzen an beiden Enden spitz zulaufend ausgebildete Zungen. Daraus folgt zum Beispiel, daß eine fortlaufende Fertigung solcher Kabelmuffeneinlagen senkrecht zur Achse erfolgen muß. Dies bedeutet, daß die Länge dieser Kabelmuffeneinlagen bei vorgegebener Form immer gleich ist. Eine Anpassung in der Länge ist nicht möglich. So ist durch die Kabelmuffeneinlage auch die Länge der Kabelmuffe bestimmt. Weiterhin ist die Festigkeit bzw. Formbeständigkeit dieser Kabelmuffeneinlagen in radialer Richtung im wesentlichen durch den Schichtenaufbau bestimmt, wobei die Stärken der Schichten und das verwendete Material ausschlaggebend sind. Bei Kabelmuffen, die mit Innendruck beaufschlagt werden, ergeben sich somit gewisse Schwierigkeiten bezüglich der Druckfestigkeit.

Für vorliegende Erfindung ergibt sich nun die Aufgabe, eine schrumpfbare Kabelmuffe zu schaffen, die in universeller Weise bezüglich der Größe und bezüglich Innendruckbeaufschlagung verwendbar ist. Die gestellte Aufgabe wird nun gemäß der Erfindung mit einer Kabelmuffe der eingangs erläuterten Art dadurch gelöst, daß die Kabelmuffeneinlage eine bei Wärmezufuhr aktivierbare Schicht aufweist und daß Versteifungselemente im Schichtenverbund über der gesamten Fläche der Kabelmuffeneinlage verteilt auf einer Grundfolie angeordnet sind.

An der Kabelmuffe gemäß der Erfindung sind nun Vorteile besonders darin zu sehen, daß die Kabelmuffeneinlage bei einfachster, fortlaufend bandartiger Fertigung den erforderlichen Größen in der Länge wie auch im Durchmesser angepasst werden kann, da bei dieser Ausbildung keine Vorzugsrichtung betrachtet werden muß. So ist auch ein individueller Zuschnitt für Spezialfälle völlig problemlos. Über die gewickelte und angepaßte Kabelmuffeneinlage wird dann die schrumpfbare Umhüllung aufgebracht und aufgeschrumpft. Von Vorteil ist dabei auch, daß die Versteifungen in der Kabelmuffeneinlage integriert sind, die im Verbund mit einer Grundfolie und mit der durch Wärmeeinwirkung aktivierbaren Schicht selbst für druckgasbeaufschlagte Kabelgarnituren eine ausreichende Festigkeit ergeben. Durch die aktivierbare Schicht der Kabelmuffeneinlage wird erreicht, daß durch Anschmelzung eine innige Verbindung zwischen der mit den Versteifungselementen versehenen Kabelmuffeneinlage und der schmelzbaren Innenbeschichtung der schrumpfbaren Umhüllung zustandekommt. Auf diese Weise erhält man einen Verbundkörper von hoher Festigkeit. Die Einlagerung der Versteifungselemente in der Kabelmuffeneinlage ist besonders deshalb auch vorteilhaft, weil die schrumpfbare Umhüllung damit frei von Dies gilt auch für eine dem deutschen Gebrauchsmuster G 83 12 426 zugrunde liegende Kabelmuffeneinlage für eine Kabelmuffe. Diese Kabelmuffeneinlage besitzt nur einen mittleren Stützbereich, während die Randbereiche aus einer nicht druckfesten Folie gebildet werden. Außerdem besteht zwischen dieser Kabelmuffeneinlage und der darüber anzubringenden Umhüllung kein inniger Verbund, der die Festigkeit steigern könnte.

Stützelementen ungehindert aufgeschrumpft werden kann. Bisher waren für derartige Einsatzfälle schrumpfbare Umhüllungen mit entsprechenden Einlagerungen üblich. Dadurch, daß die Randbereiche der Kabelmuffeneinlage verformbar sind, müssen diese Bereiche nicht wie bisher mit entsprechenden Aussparungen, Fiederungen oder dergleichen versehen werden. Durch die Einfachheit dieser Kabelmuffeneinlagen können jedoch auch hier zusätzliche Einschnitte problemlos und nachträglich im Bedarfsfall ausgeführt werden. Diese Tatsache erleichtert die Herstellung solcher Kabelmuffeneinlagen und macht sie außerdem universell einsetzbar. Die in der Kabelmuffeneinlage integrierten Versteifungselemente können aus verschiedenartigen Materialien bestehen und in verschiedenster Formgebung ein- bzw. aufgebracht werden. So ist auch möglich, die Versteifungselemente in Form von Verdickungen oder verdicktem Auftrag der aktivierbaren Schicht der Kabelmuffeneinlage zu bilden. Diese Art der Kabelmuffeneinlage ist besonders günstig herzustellen, da keinerlei zusätzlichen Einlagerungen benötigt werden. Dabei ist die schrumpfbare Umhüllung der Kabelmuffe in weiten Grenzen unkritisch, da bei den verschiedensten Anwendungsfällen immer die gleiche Ausführungsform, zum Beispiel als fortlaufender und je nach Bedarf beschnittener Schlauch, verwendet werden kann.

Im folgenden werden nun verschiedene Ausführungsformen gemäß der Erfindung anhand von zwölf Figuren näher erläutert.

Figur 1
zeigt den prinzipiellen Aufbau einer erfindungsgemäßen Kabelmuffe mit schrumpfbarer Umhüllung und der innen liegenden Kabelmuffeneinlage.
Figur 2

zeigt einen dreischichtigen Aufbau für die Kabelmuffeneinlage.

Figur 3

zeigt einen zweischichtigen Aufbau mit Versteifungselementen und

Figur 4

einen dreischichtigen Aufbau, ebenfalls mit Versteifungselementen.

Figur 5

erläutert einen dreischichtigen Aufbau mit einer zusätzlichen streifenförmigen Zusatzschicht entlang eines Randes der Kabelmuffeneinlage.

Figur 6

erklärt den Verlauf von einfach gestreckten Versteifungselementen in der späteren Achsrichtung der Kabelmuffeneinlage.

Figur 7

zeigt eine gitterförmige Einlagerung von Versteifungselementen mit parallel zu den Rändern verlaufenden Einzelelementen, während

Figur 8

eine gitterförmige Einlagerung verdeutlicht, deren Einzelelemente jeweils unter einem Winkel zu den Seitenrändern versetzt sind.

Figur 9

verdeutlicht eine besonders flexible Ausbildung einer Kabelmuffeneinlage.

Figur 10 und Figur 11

verdeutlichen einen besonderen Zuschnitt für eine Kabelmuffeneinlage.

Figur 12

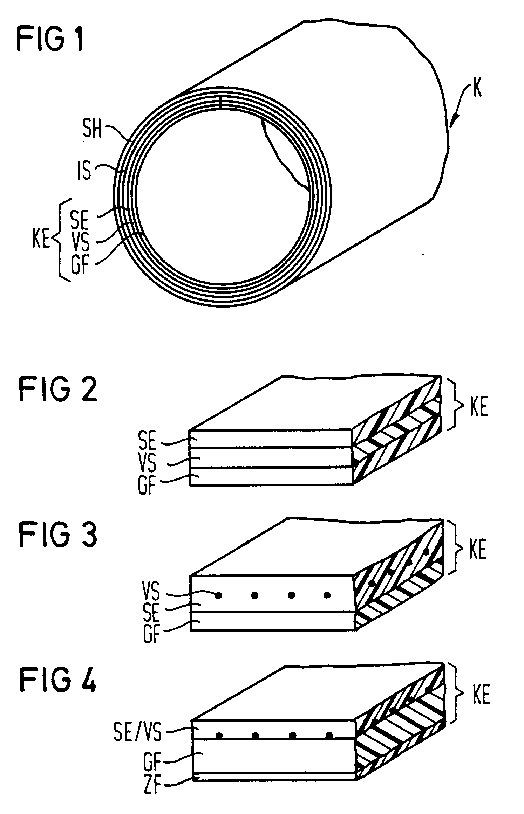

erläutert den montierten Zustand einer Kabelmuffeneinlage, über welche schließlich die schrumpfbare Hülle, wie in Figur 1 angedeutet ist, aufgebracht werden kann.

In Figur 1 wird der prinzipielle Aufbau einer Kabelmuffe K gemäß der Erfindung erläutert. Die äußere, schrumpfbare Hülle SH besitzt auf der Innenseite eine Innenschicht IS aus einem bei Wärmeeinwirkung schmelzbaren Material, zum Beispiel aus einem der gebräuchlichen Schmelzkleber. Darunter befindet sich die Kabelmuffeneinlage KE, die zunächst unabhängig von der schrumfpbaren Hülle SH aufgebracht werden kann und die hier der Einfachheit wegen auf Stoß zusammengefügt ist. Sie kann jedoch durch Übereinanderbringen der Längsränder dem jeweils gewünschten Durchmesser angepaßt werden. Gemäß der Erfindung wird die in der schrumpfbaren Kabelmuffe K verwendete Kabelmuffeneinlage KE aus mehreren übereinander liegenden Schichten verschiedener Materialien gebildet, die den jeweiligen Erfordernissen entsprechen. Diese Forderungen beziehen sich in erster Linie auf den Permeationsschutz, den Temperaturschutz und auf die nötige Festigkeit, wobei in dieser letzten Forderung auch Überlegungen bezüglich der Anpassungsfähigkeit mit berücksichtigt werden müssen. Die Kabelmuffeneinlage KE besteht nun zunächst aus einer Grundfolie GF, die ihrerseits unter Umständen noch mit einer zusätzlichen Deckfolie, die hier nicht skizziert ist, versehen ist. Weiterhin sind auf dieser Grundfolie GF Versteifungselemente VS aufgebracht, die entweder flächenhaft, gitterförmig aus Einzelelementen oder auch aus zusammenhängenden Flächen gebildet werden. Über dieser Schicht aus Versteifungselementen VS befindet sich nun eine durch Wärmezufuhr aktivierbare Schicht SE, wofür sich insbesondere an sich bekannte Schmelzklebermaterialien eignen. Die gesamte Ausbildung dieser Kabelmuffeneinlage KE ist flächenhaft und besitzt keine Einschnitte, Fiederungen oder dergleichen, so daß sie in einem einfachen Verfahren als bandförmiges, nach Belieben beschneidbares Element für die Kabelmuffe K hergestellt werden kann. Beim Schrumpfvorgang werden die beiden aktivierbaren Schichten, die Innenschicht IS der schrumpfbaren Hülle SH und die Schicht SE der Kabelmuffeneinlage KE angeschmolzen und gehen dadurch eine innige Verbindung miteinander ein, so daß eine besonders stabile Bauform erhalten wird. Diese Bauform erfüllt sogar die Forderungen für Kabelanlagen mit Innendruckbeaufschlagung. Auf diese Weise sind derartige Kabelmuffeneinlagen KE im Zusammenhang mit schrumpfbaren Manschetten oder Schläuchen auch für druckdichte Schrumpfmuffen und für druckdichte Umhüllungen bei Kabelreparaturen einsetzbar.

Je nach Aufbau und Konstruktion der Einzelschichten der Kabelmuffeneinlage KE kann eine im Montagezustand relativ flexible und auch eine starre Bauform erstellt werden. So sind zum Beispiel auch Kabelmuffeneinlagen in Form von Halbschalen möglich, die relativ starr sind und entlang der Trennfugen mit entsprechenden Fixierungen aufeinander ausgerichtet und zusammengehalten werden. Doch auch hier entsteht durch die aktivierbare Schicht ein fester Verbund mit der schrumpfbaren Umhüllung, so daß hierdurch eine besonders druckfeste Ausführungsform erhalten wird.

Bei all diesen Bauformen ist jedoch von großem Vorteil, daß die Versteifungselemente jeweils in der Kabelmuffeneinlage integriert sind, so daß die schrumpfbare Hülle erst im Verbund mit der Kabelmuffeneinlage die benötigte Festigkeit erhält. Ebenso ist der Temperatur- wie auch Permeationsschutz in der Kabelmuffeneinlage integriert, so daß die schrumpfbare Hülle auch von diesen Problemen, die durch die Schrumpffähigkeit erhöht sind, befreit ist.

Die Figur 2 verdeutlicht nun ein Beispiel für die Verbundmöglichkeit von einzelnen Schichten für die Kabelmuffeneinlage KE. Die Grundfolie GF besteht zum Beispiel hierbei aus permeationsdichten Materialien, wie Metallfolien zum Beispiel aus Aluminium oder aus anderen hochpermeationsdichten

Kunststofffolien. Die Festigkeit für die Grundfolie GF läßt sich für sich durch eingelagerte oder aufgesetzte Verstärkungselemente in Form von Gittergeflechten oder ähnlichem verbessern, so daß sie für die folgenden Schichten besser geeignet ist. Hierauf folgt dann die Schicht aus Versteifungselementen VS, die von der aktivierbaren Schicht SE überdeckt wird. Bei Bedarf können, wie bereits angedeutet, zusätzliche Deckfolien für teilweise oder gesamte Abdeckung aufgebracht werden. Hierfür eignen sich zum Beispiel Kunststofffolien wie Hostafan oder auch Duroplaste, die eventuell als Halbschalen ausgeformt sind. Weiterhin können für spezielle Anwendungsfälle auch zusätzliche Abdeckungen aus Pappe oder Preßspan verwendet werden. Auch zusätzliche Deckfolien aus Glasfasergeflechten oder zumindest kurzzeitig temperaturfesten Materialien können hierfür Verwendung finden. Bei derartigen Deckfolien über den einzelnen Schichten ist jedoch der erfindungsgemäße Gedanke bezüglich der einfachen flächenhaften Ausbildung und des bereits näher erläuterten Schichtenverbundes von Bedeutung, wie es in Figur 2 mit den Schichten GF, VS und SE angedeutet ist.

In Figur 3 ist ein Schichtenverbund für eine Kabelmuffeneinlage KE dargestellt, bei der in der aktivierbaren Schicht SE die Vesteifungselemente VS, zum Beispiel in Form eines Gittergeflechtes, eingelagert sind. Bei dieser ineinandergreifenden Verbundschicht VS-SE bestehen die Versteifungselemente zum Beispiel aus einem gitterförmigen Geflecht aus Glasfasern oder ähnlichem. Die Grundfolie GF ist in der bereits beschriebenen Art ausgeführt.

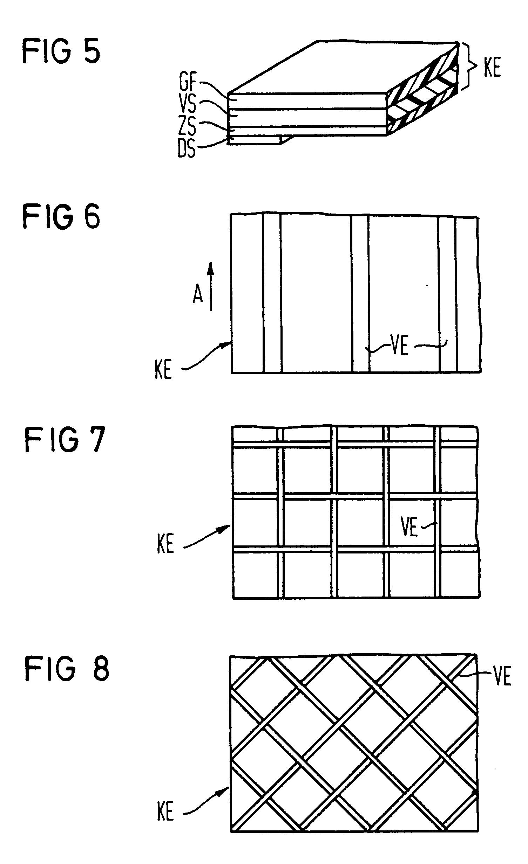

Die Figur 4 vereinigt nun mehrere bereits beschriebene Konstruktionen, so zum Beispiel die Einlagerung der Versteifungselemente VS in der aktivierbaren Schicht SE, die somit als eine einzige Schicht SE-VS angesehen werden kann. Die darunter liegende Grundfolie GF ist weiterhin mit einer Deck- oder zusatzfolie ZF, wie sie ebenfalls bereits beschrieben ist, belegt.

Figur 5 zeigt ein Ausführungsbeispiel für eine Kabelmuffeneinlage KE, deren Grundfolie GF mit einer Zusatzschicht der beschriebenen Art beschichtet ist. Die Zusatzschicht ZS besitzt jedoch keine Klebe- bzw.Dichteigenschaften und haftet somit auch nicht besonders gut und dicht auf dem umwickelten Gegenstand, zum Beispiel einem in den Kabelspleiß eingeführten Kabel. Um auch hier eine ausreichende Dichtigkeit gewähren zu können, wird der Randbereich, der dicht aufliegen muß, mit einer Dichtungsschicht DS, zum Beispiel ebenfalls mit einem der herkömmlichen Schmelzkleber, beschichtet. Hierfür sind auch zähplastische Dichtungsmassen oder ähnliches geeignet.

Die Figur 6 verdeutlicht die Anordnung von längsgestreckten Versteifungselementen VE in der entsprechenden Schicht der Kabelmuffeneinlage KE, die in Achsrichtung A verlaufen. Der Abstand zueinander, wie auch die Längen der Versteifungselemente VE werden je nach Anwendungsfall gewählt, wobei auch hier wiederum die Fertigungsrichtung mit der späteren Achsrichtung der Kabelmuffeneinlage KE zusammenfällt, so daß auch hier eine fortlaufende bandförmige Fertigung möglich ist. Die Kabelmuffeneinlage KE kann dann in erforderlicher Länge von diesem bandförmigen Stück abgetrennt werden.

Die Figur 7 zeigt wiederum einen Einblick in die Ebene der Versteifungselemente VE der Kabelmuffeneinlage KE, wobei hier für die Anordnung der Versteifungselemente VE eine Gitterstruktur gewählt wurde. Die einzelnen Versteifungselemente VE verlaufen in diesem Fall parallel zu den Kanten der Kabelmuffeneinlage KE.

Die Figur 8 zeigt eine Abwandlung der gitterförmigen Anordnung von Versteifungselementen VE, die hier unter einem Winkel zur Hauptrichtung der Kabelmuffeneinlage KE versetzt sind. Auf diese Weise kann die Flexibilität und Verformbarkeit der Kabelmuffeneinlage KE beeinflußt werden.

Die Abstände sowie die Anzahl der Versteifungselemente VE können verschieden sein und richten sich jeweils nach dem geforderten Festigkeitsgrad. Die Formen der Versteifungselemente können ebenfalls beliebig gewählt werden, so sind schmale, flache, mehrkantige Streifen ebenso wählbar wie runde oder ovale Querschnitte. Auch die Auswahl des Materials ist im Prinzip frei, doch eignen sich hierfür insbesondere die an sich bekannten Schmelzkleberwerkstoffe, Polyolefine, Duroplaste, Polyester, Preßspan, Pappe, Glas-, Asbest- oder Keflarfasern. Ebenso sind Kombinationen von Versteifungselementen der genannten Art möglich.

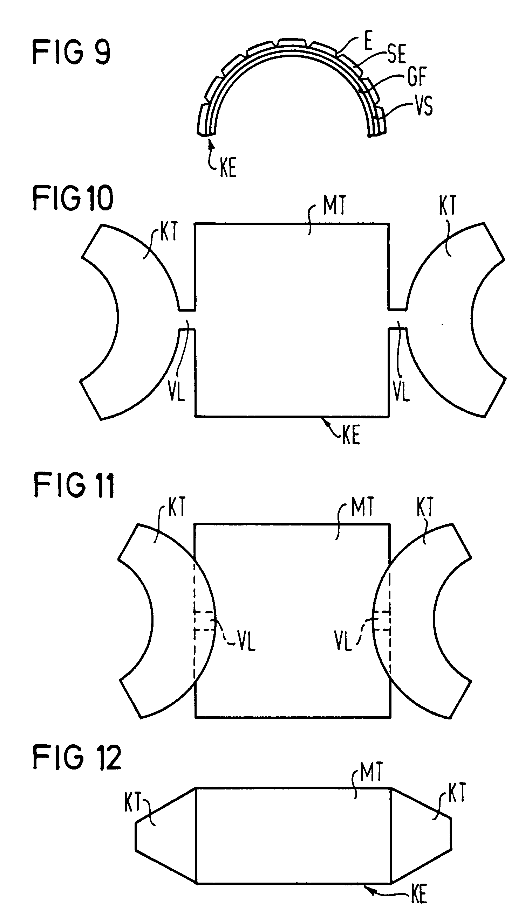

Die Figur 9 verdeutlicht nun als Ausführungsbeispiel eine Kabelmuffeneinlage KE in frontaler Ansicht. Sie besteht gemäß der Erfindung aus der Grundfolie GF, auf welche die Versteifungselemente VS aufgebracht sind, die entweder in der aktivierbaren Schicht SE eingelagert sind oder von dieser überdeckt werden. Diese oberste aktivierbare Schicht SE weist nun in Längsrichtung verlaufende, nutförmige Einschnitte E auf, durch die die radiale Biegefähigkeit erhöht wird. Die in der Figur gezeigte Ausführungsform kann nun gelten für eine zunächst plan ausgebildete Kabelmuffeneinlage KE, die bereits in Wickelrichtung vorgebogen ist. Man kann diese Form jedoch auch ansehen für eine Kabelmuffeneinlage KE, die aus stabilen Halbschalen geformt wird. Diese Halbschalen besitzen dann in den Trennfugen zueinander passende Fixiervorrichtungen. In beiden Fällen wird schließlich die Kabelmuffeneinlage KE mit der schrumpfbaren Hülle umgeben, wobei sich durch das Anschmelzen der einander zugewandten Schichten der Schichtenverbund ergibt, der die hohe Festigkeit besitzt, die auch eine Innendruckbeaufschlagung zuläßt. Die stirnseitigen Abschlüsse mit den Kabeleinführungen können in verschiedenen Ausführungen erfolgen. Bei entsprechenden, im wesentlichen längsgerichteten Versteifungselementen VS ist beispielsweise auch eine konische Anpassung der Kabelmuffeneinlage KE zu ereichen, da durch genügende Erwärmung während des Schrumpfvorganges die aktivierbare Schicht erweicht und durch die schrumpfende Hülle in konisch zulaufender Weise auf den kleineren Durchmesser eines eingeführten Kabels niedergedrückt und angepaßt werden kann. Die konisch zulaufenden Anpassungsstücke können jedoch auch durch entsprechende Zuschnitte gebildet werden, da die bandförmig gefertigten Stücke für die Kabelmuffeneinlagen in beliebiger Weise beschnitten werden können. So werden dann diese Zuschnmitte an den Stirnseiten des gewickelten Mitelteils der Kabelmuffeneinlage angeformt, leicht fixiert und durch die anschließende Aufschrumpfung der Hülle in den Schichtenverbund mit einbezogen.

Die folgenden Figuren 10, 11 und 12 zeigen nun die einzelnen Montagephasen eines weiteren Ausführungsbeispieles, das nach den Prinzipien der Erfindung zusammengestellt ist. Aus dem bandförmig gefertigten Schichtenverbund wird nun zunächst eine Form nach Figur 10 ausgeschnitten. Sie setzt sich zusammen aus einem rechteckförmigen Mittelteil MT und zwei konischen Teilen KT, die über Verbindungslaschen VL am Mittelteil MT angeheftet sind. Das Mittelteil MT dient zur Umhüllung des abzudeckenden Gebildes, wie zum Beispiel eines Kabelspleißes oder einer Reparaturstelle eines Kabels, während mit den beiden konischen Teilen KT die Durchmesseranpassung zwischen dem Mittelteil MT und den eingeführten Gegenständen erfolgt und zwar ebenfalls durch Wickeln. Die in der Figur 10 angedeutete Form dieser konischen Teile KT ergibt jeweils im gewickelten Zustand die kegelförmige Anpassung. Durch die Verbindungslaschen VL sind die konischen Teile KT am Mittelteil MT unverlierbar verbunden und dienen schließlich als Montagehilfe, wenn sie auf das Mittelteil MT zurückgeklappt und fixiert werden, wie dies in Figur 11 gezeigt wird. Damit sind die konischen Teile KT bereits in einem Punkt jeweils so fixiert, daß sich beim Zusammenwickeln Überdeckungen in den Knickbereichen ergeben. Durch Erweichung beim Schrumpfvorgang werden diese Bereiche angeglichen und verschmelzen schließlich zu einem festen Verbund. Die Figur 12 zeigt nun den Endzustand dieser montierten Kabelmuffeneinlage KE mit dem zylindrischen Mittelteil MT und den beiden konischen Teilen KT. Über diese montierte Form wird nun die schrumpfbare Hülle aufgebracht, mit der wiederum der druckfeste Verbund zwischen der Hülle und der Kabelmuffeneinlage hergestellt wird.

Will man jedoch auf den innigen Verbund von schrumpfbarer Hülle und Kabelmuffeneinlage aus bestimmten Gründen verzichten, so kann dies durch umgekehrtes Eindrehen der Kabelmuffeneinlage erreicht werden. In diesem Fall liegt dann die permeationsdichte Schicht der Kabelmuffeneinlage außen und die aktivierbare Schicht innen.

**Patentansprüche**

1.  Schrumpfbare Kabelmuffe, bestehend aus einer schrumpfbaren Hülle und einer inneren Kabelmuffeneinlage, die aus mehreren Schichten gebildet ist,
    **dadurch gekennzeichnet,**
    daß die schrumpfbare Hülle (SH) eine bei Wärmezufuhr schmelzbare Innenbeschichtung (IS) und die Kabelmuffeneinlage (KE) eine der Innenbeschichtung (IS) der Hülle (SH) zugewandte und bei Wärmezufuhr aktivierbare Schicht (SE) aufweist, wobei die durch Wärme aktivierbaren Schichten (IS, SE) miteinander verschmelzbar sind und daß Versteifungselemente (VS) im Schichtenverbund der Kabelmuffeneinlage (KE) über der gesamten Fläche verteilt auf einer Grundfolie (GF) angeordnet sind.

2.  Schrumpfbare Kabelmuffe nach Anspruch 1, **dadurch gekennzeichnet,** daß die Versteifungselemente (VE) aus längsverlaufenden stabförmigen Elementen bestehen.

3.  Schrumpfbare Kabelmuffe nach Anspruch 1, **dadurch gekennzeichnet,** daß die Verstärkungselemente (VE) aus gitterförmig angeordneten Elementen bestehen.

4.  Schrumpfbare Kabelmuffe nach Anspruch 3, **dadurch gekennzeichnet,** daß die Einzelelemente der gitterförmig angeordneten Versteifungselemente (VE) parallel zu den Rändern der Kabelmuffeneinlage (KE) angeordnet sind.

5.  Schrumpfbare Kabelmuffe nach Anspruch 3, **dadurch gekennzeichnet,** daß die Einzelelemente der gitterförmig angeordneten Versteifungselemente (VE) unter einem Winkel, vorzugsweise unter 45°, zu den Rändern der Kabelmuffeneinlage (KE) versetzt angeordnet sind.

6.  Schrumpfbare Kabelmuffe nach einem der vorhergehenden Ansprüche, **dadurch gekennzeichnet,** daß die Einzelelemente der Versteifungselemente (VE) gleichen Abstand aufweisen.

7. Schrumpfbare Kabelmuffe nach einem der Ansprüche 1 bis 5, **dadurch gekennzeichnet,** daß die Einzelelemente der Versteifungselemente (VE) ungleiche Abstände aufweisen.

8. Schrumpfbare Kabelmuffe nach einem der vorhergehenden Ansprüche, **dadurch gekennzeichnet,** daß die Einzelelemente der Versteifungselemente (VE) als flache Streifen ausgebildet sind.

9. Schrumpfbare Kabelmuffe nach einem der Ansprüche 1 bis 7, **dadurch gekennzeichnet,** daß die Einzelelemente der Versteifungselemente (VE) als profilierte, vorzugsweise mehrkantige Stäbe ausgebildet sind.

10. Schrumpfbare Kabelmuffe nach einem der Ansprüche 1 bis 7, **dadurch gekennzeichnet,** daß die Versteifungselemente (VE) flächenhaft ausgebildet sind.

11. Schrumpfbare Kabelmuffe nach einem der vorhergehenden Ansprüche, **dadurch gekennzeichnet,** daß die Versteifungselemente aus einem bei Wärmezufuhr aktivierbaren Material, vorzugsweise aus Schmelzkleber, bestehen.

12. Schrumpfbare Kabelmuffe nach einem der Ansprüche 1 bis 10, **dadurch gekennzeichnet,** daß die Versteifungselemente (VE) aus einem Polyolefin, vorzugsweise aus Polypropylen bestehen.

13. Schrumpfbare Kabelmuffe nach einem der Ansprüche 1 bis 10, **dadurch gekennzeichnet,** daß die Versteifungselemente (VE) aus einem Duroplasten gebildet sind.

14. Schrumpfbare Kabelmuffe nach einem der Ansprüche 1 bis 10, **dadurch gekennzeichnet,** daß die Versteifungselemente aus Polyester gebildet sind.

15. Schrumpfbare Kabelmuffe nach einem der Ansprüche 1 bis 10, **dadurch gekennzeichnet,** daß die Versteifungseinlagen aus faserförmigen Stoffen, insbesondere aus Glas- oder Keflarfasern, gebildet sind.

16. Schrumpfbare Kabelmuffe nach einem der Ansprüche 1 bis 10, **dadurch gekennzeichnet,** daß die Versteifungselemente (VE) aus spanförmigen Preßstoffen, vorzugsweise aus Pappe oder Preßspan, gebildet sind.

17. Schrumpfbare Kabelmuffe nach einem der vorhergehenden Ansprüche, **dadurch gekennzeichnet,** daß mindestens eine Schicht aus permeationsdichtem Material, vorzugsweise aus einer Aluminiumfolie besteht.

18. Schrumpfbare Kabelmuffe nach einem der vorhergehenden Ansprüche, **dadurch gekennzeichnet,** daß die aktivierbaren Schichten (IS, SE) verschiedene Schmelzpunkte aufweisen.

19. Schrumpfbare Kabelmuffe nach einem der vorhergehenden Ansprüche, **dadurch gekennzeichnet,** daß die Versteifungseinlagen (VE) eine eigene Schicht im Schichtenverbund bilden.

20. Schrumpfbare Kabelmuffe nach einem der Ansprüche 1 bis 18, **dadurch gekennzeichnet,** daß die Versteifungselemente (VE) in der aktivierbaren Schicht (SE) eingelagert sind.

21. Schrumpfbare Kabelmuffe nach einem der Ansprüche 1 bis 18, **dadurch gekennzeichnet,** daß die Versteifungselemente (VE) mit der aktivierbaren Schicht identisch sind.

22. Schrumpfbare Kabelmuffe nach einem der vorhergehenden Ansprüche, **dadurch gekennzeichnet,** daß der bandförmig gefertigte Schichtenverbund der Kabelmuffeneinlage (KE) beliebig beschneidbar ist.

23. Schrumpfbare Kabelmuffe nach einem der vorhergehenden Ansprüche, **dadurch gekennzeichnet,** daß die Kabelmuffeneinlage (KE) aus einem wickelbaren rechteckigen Mittelteil (MT) und seitlich anschließenden konischen Teilen (KT) gebildet wird.

24. Schrumpfbare Kabelmuffe nach Anspruch 23, **dadurch gekennzeichnet,** daß die konischen Teile (KT) über Verbindungslaschen (VT) am Mittelteil (MT) angehängt sind.

25. Schrumpfbare Kabelmuffe nach einem der Ansprüche 1 bis 20, **dadurch gekennzeichnet,** daß die Kabelmuffeneinlage (KE) aus relativ stabilen Halbschalen gebildet ist.

26. Schrumpfbare Kabelmuffe nach einem der vorhergehenden Ansprüche, **dadurch gekennzeichnet,** daß die Kabelmuffeneinlage (KE) in Längsrichtung nutförmige Einschnitte (E) aufweist.

27. Schrumpfbare Kabelmuffe nach einem der vorhergehenden Ansprüche, **dadurch gekenn-**

**zeichnet,** daß die Grundfolie (GF) aus einer Aluminiumgittergeflechtsfolie besteht.

28. Schrumpfbare Kabelmuffe nach einem der Ansprüche 1 bis 26, **dadurch gekennzeichnet,** daß die Grundfolie (GF) aus einer aluminiumkaschierten Kunststoffolie besteht.

29. Schrumpfbare Kabelmuffe nach einem der vorhergehenden Ansprüche, **dadurch gekennzeichnet,** daß eine Deckfolie, vorzugsweise aus Hostaphan, vollständig die Kabelmuffeneinlage (KE) überdeckend aufgebracht ist.

30. Schrumpfbare Kabelmuffe nach einem der Ansprüche 1 bis 28, **dadurch gekennzeichnet,** daß eine Deckfolie, vorzugsweise aus Hostaphan in Teilbereichen der Kabelmuffeneinlage (KE) angeordnet ist.

31. Schrumpfbare Kabelmuffe nach einem der Ansprüche 1 bis 28, **dadurch gekennzeichnet,** daß eine Deckfolie aus kurzzeitig temperaturfesten Materialien angeordnet ist.

32. Schrumpfbare Kabelmuffe nach einem der Ansprüche 1 bis 22 oder 26 bis 31, **dadurch gekennzeichnet,** daß die seitlichen, konischen Anpassungsbereiche der Kabelmuffeneinlage (KE) aus den Randbereichen des Schichtenverbundes der Kabelmuffeneinlage (KE) gebildet sind.

33. Schrumpfbare Kabelmuffe nach einem der Ansprüche 1 bis 22 oder 26 bis 31, **dadurch gekennzeichnet,** daß separate, konisch geformte Anpassungsstücke an das Mittelteil der Kabelmuffeneinlage (KE) angeformt sind.

34. Verfahren zur Montage einer Kabelmuffe nach einem der vorhergehenden Ansprüche, **dadurch gekennzeichnet,** daß die innere Kabelmuffeneinlage (KE) aus einem bandförmig gefertigten Schichtenverbund in der benötigten Längenausdehnung und für den erforderlichen Durchmesser zugeschnitten wird, daß dann dieser Zuschnitt auf den zu schützenden Gegenstand aufgewickelt wird, daß darüber eine schrumpfbare Hülle aufgebracht wird, und daß dann durch Wärmezufuhr die aktivierbaren Schichten (IS, SE) der schrumpfenden Hülle (SH) und der Kabelmuffeneinlage (KE) miteinander verschmolzen werden.

**Claims**

1. Shrinkable cable sleeve consisting of a shrinkable envelope and an inner cable sleeve insert which is formed from a plurality of layers, characterised in that the shrinkable envelope (SH) has an inner coating (IS) meltable upon the supply of heat and the cable sleeve insert (KE) has a layer (SE) facing the inner coating (IS) of the envelope (SH) and activatable upon the supply of heat, the layers (IS, SE) activatable by heat being capable of fusing with one another, and in that reinforcing elements (VS) in the layer composite of the cable sleeve insert (KE) are arranged on a basic foil (GF) distributed over the entire surface.

2. Shrinkable cable sleeve according to Claim 1, characterised in that the reinforcing elements (VE) consist of longitudinally extending rod-shaped elements.

3. Shrinkable cable sleeve according to Claim 1, characterised in that the reinforcing elements (VE) consist of elements arranged in a grid-like fashion.

4. Shrinkable cable sleeve according to Claim 3, characterised in that the individual elements of the reinforcing elements (VE) arranged in a grid-like fashion are arranged parallel to the edges of the cable sleeve insert (KE).

5. Shrinkable cable sleeve according to Claim 3, characterised in that the individual elements of the reinforcing elements (VE) arranged in a grid-like fashion are arranged offset at an angle, preferably at 45°, relative to the edges of the cable sleeve insert (KE).

6. Shrinkable cable sleeve according to one of the preceding claims, characterised in that the individual elements of the reinforcing elements (VE) have an identical spacing.

7. Shrinkable cable sleeve according one of Claims 1 to 5, characterised in that the individual elements of the reinforcing elements (VE) have unequal spacings.

8. Shrinkable cable sleeve according to one of the preceding claims, characterised in that the individual elements of the reinforcing elements (VE) are constructed as flat strips.

9. Shrinkable cable sleeve according to one of Claims 1 to 7, characterised in that the individual elements of the reinforcing elements (VE) are constructed as profiled, preferably multi-edge rods.

10. Shrinkable cable sleeve according to one of Claims 1 to 7, characterised in that the reinforcing elements (VE) are constructed in a planar fashion.

11. Shrinkable cable sleeve according to one of the preceding claims, characterised in that the reinforcing elements consist of a material, preferably of a hot melt adhesive, activatable upon the supply of heat.

12. Shrinkable cable sleeve according to one of Claims 1 to 10, characterised in that the reinforcing elements (VE) consist of a polyolefin, preferably of polypropylene.

13. Shrinkable cable sleeve according to one of Claims 1 to 10, characterised in that the reinforcing elements (VE) are formed from a thermosetting plastic.

14. Shrinkable cable sleeve according to one of Claims 1 to 10, characterised in that the reinforcing elements are formed from polyester.

15. Shrinkable cable sleeve according to one of Claims 1 to 10, characterised in that the reinforcing elements (VE) are formed from fibrous materials, in particular from glass fibres or Kevlar fibres.

16. Shrinkable cable sleeve according to one of Claims 1 to 10, characterised in that the reinforcing elements (VE) are formed from chip-type pressed materials, preferably from cardboard or pressboard.

17. Shrinkable cable sleeve according to one of the preceding claims, characterised in that at least one layer consists of a permeation-tight material, preferably of an aluminium foil.

18. Shrinkable cable sleeve according to one of the preceding claims, characterised in that the activatable layers (IS, SE) have different melting points.

19. Shrinkable cable sleeve according to one of the preceding claims, characterised in that the reinforcing elements (VE) form a separate layer in the layer composite.

20. Shrinkable cable sleeve according to one of Claims 1 to 18, characterised in that the reinforcing elements (VE) are embedded in the activatable layer (SE).

21. Shrinkable cable sleeve according to one of Claims 1 to 18, characterised in that the reinforcing elements (VE) are identical with the activatable layer.

22. Shrinkable cable sleeve according to one of the preceding claims, characterised in that the layer composite of the cable sleeve insert (KE) is produced in a band-like fashion and can be trimmed as required.

23. Shrinkable cable sleeve according to one of the preceding claims, characterised in that the cable sleeve insert (KE) is formed from a windable, rectangular centre part (MT) and laterally adjoining conical parts (KT).

24. Shrinkable cable sleeve according to Claim 23, characterised in that the conical parts (KT) are appended to the centre part (MT) via connecting webs (VL).

25. Shrinkable cable sleeve according to one of Claims 1 to 20, characterised in that the cable sleeve insert (KE) is formed from relatively stable half-shells.

26. Shrinkable cable sleeve according to one of the preceding claims, characterised in that the cable sleeve insert (KE) has groove-shaped incisions (E) in the longitudinal direction.

27. Shrinkable cable sleeve according to one of the preceding claims, characterised in that the basic foil (GF) consists of an aluminium grid weave foil.

28. Shrinkable cable sleeve according to one of Claims 1 to 26, characterised in that the basic foil (GF) consists of an aluminium laminated plastic foil.

29. Shrinkable cable sleeve according to one of the preceding claims, characterised in that a cover foil, preferably made of Hostaphan, is applied in a fashion completely covering the cable sleeve insert (KE).

30. Shrinkable cable sleeve according to one of Claims 1 to 28, characterised in that a cover foil, preferably made of Hostaphan, is arranged in subregions of the cable sleeve insert (KE).

31. Shrinkable cable sleeve according to one of Claims 1 to 28, characterised in that a cover foil made of transiently thermostable materials is arranged.

32. Shrinkable cable sleeve according to one of Claims 1 to 22 or 26 to 31, characterised in that the lateral, conical adaptation regions of the cable sleeve insert (KE) are formed from the edge regions of the layer composite of the cable sleeve insert (KE).

33. Shrinkable cable sleeve according to one of Claims 1 to 22 or 26 to 31, characterised in that separate, conically shaped adaptation pieces are integrally formed on the centre part of the cable sleeve insert (KE).

34. Process for fitting a cable sleeve according to one of the preceding claims, characterised in that the inner cable sleeve insert (KE) made of a layer composite produced in a band-like fashion is cut to size with the required longitudinal extent and for the required diameter, in that this blank is then wound onto the object to be protected, in that a shrinkable envelope is applied thereover, and in that the activatable layers (IS, SE) of the shrinking envelope (SH) and the cable sleeve insert (KE) are then fused with one another by the supply of heat.

**Revendications**

1. Manchon de câble rétractable, constitué d'une gaine rétractable et d'une doublure intérieure du manchon de câble qui est formée de plusieurs couches,
caractérisé,
en ce que la gaine (SH) rétractable comporte un revêtement intérieur (IS) fusible par apport de chaleur et la doublure (KE) du manchon de câble comporte une couche (SE) tournée vers le revêtement intérieur (IS) de la gaine (SH) et susceptible d'être activée par apport de chaleur, les couches (IS, SE) susceptibles d'être activées par la chaleur pouvant être réunies par fusion, et en ce que des éléments de renforcement (VS) sont disposés dans le composite stratifié de la doublure (KE) du manchon de câble sur une feuille de base (GF) en étant répartis sur toute la surface.

2. Manchon de câble rétractable suivant la revendication 1, caractérisé en ce que les éléments de renforcement (VE) sont constitués d'éléments longitudinaux en forme de bâtonnets.

3. Manchon de câble rétractable suivant la revendication 1, caractérisé en ce que les éléments de renforcement (VE) sont constitués d'éléments disposés sous la forme d'un treillis.

4. Manchon de câble rétractable suivant la revendication 3, caractérisé en ce que les éléments individuels des éléments de renforcement (VE) disposés sous la forme d'un treillis sont disposés parallèlement aux bords de la doublure (KE) du manchon de câble.

5. Manchon de câble rétractable suivant la revendication 3, caractérisé en ce que les éléments individuels des éléments de renforcement (VE) disposés sous la forme d'un treillis font un angle de préférence de 45° avec les bords de la doublure (KE) du manchon de câble.

6. Manchon de câble rétractable suivant l'une des revendications précédentes, caractérisé en ce que les éléments individuels des éléments de renforcement (VE) sont disposés à un même intervalle.

7. Manchon de câble rétractable suivant l'une des revendications 1 à 5, caractérisé en ce que les éléments individuels des éléments de renforcement (VE) sont disposés à des intervalles inégaux.

8. Manchon de câble rétractable suivant l'une des revendications précédentes, caractérisé en ce que les éléments individuels des éléments de renforcement (VE) sont constitués sous la forme de bandes plates.

9. Manchon de câble rétractable suivant l'une des revendications 1 à 7, caractérisé en ce que les éléments individuels des éléments de renforcement (VE) sont constitués sous la forme de bâtonnets profilés, de préférence à plusieurs arêtes.

10. Manchon de câble rétractable suivant l'une des revendications 1 à 7, caractérisé en ce que les éléments individuels des éléments de renforcement (VE) ont une constitution plate.

11. Manchon de câble rétractable suivant l'une des revendications précédentes, caractérisé en ce que les éléments de renforcement sont en un matériau susceptible d'être activé par apport de chaleur, de préférence en colle fusible.

12. Manchon de câble rétractable suivant l'une des revendications 1 à 10, caractérisé en ce que les éléments de renforcement (VE) sont en polyoléfine, de préférence en polypropylène.

13. Manchon de câble rétractable suivant l'une des revendications 1 à 10, caractérisé en ce que les éléments de renforcement sont en une résine thermodurcissable.

**14.** Manchon de câble rétractable suivant l'une des revendications 1 à 10, caractérisé en ce que les éléments de renforcement sont en polyester.

**15.** Manchon de câble rétractable suivant l'une des revendications 1 à 10, caractérisé en ce que les éléments de renforcement sont en une matière fibreuse, notamment en fibres de verre ou en fibres de kéflar.

**16.** Manchon de câble rétractable suivant l'une des revendications 1 à 10, caractérisé en ce que les éléments de renforcement (VE) sont en une matière comprimée à base de copeaux, de préférence en carton ou en presspahn.

**17.** Manchon de câble rétractable suivant l'une des revendications précédentes, caractérisé en ce qu'au moins l'une des couches est en un matériau étanche à la perméation, de préférence en une feuille d'aluminium.

**18.** Manchon de câble rétractable suivant l'une des revendications précédentes, caractérisé en ce que les couches (IS, SE) susceptibles d'être activées ont des points de fusion différents.

**19.** Manchon de câble rétractable suivant l'une des revendications précédentes, caractérisé en ce que les éléments de renforcement (VE) forment une couche proprement dite dans le composite stratifié.

**20.** Manchon de câble rétractable suivant l'une des revendications 1 à 18, caractérisé en ce que les éléments de renforcement (VE) sont insérés dans la couche (SE) susceptible d'être activée.

**21.** Manchon de câble rétractable suivant l'une des revendications 1 à 18, caractérisé en ce que les éléments de renforcement (VE) sont identiques à la couche susceptible d'être activée.

**22.** Manchon de câble rétractable suivant l'une des revendications précédentes, caractérisé en ce que le composite stratifié de la doublure (KE) du manchon de câble, qui est fabriqué sous la forme d'une bande, peut être découpé à volonté.

**23.** Manchon de câble rétractable suivant l'une des revendications précédentes, caractérisé en ce que la doublure (KE) du manchon de câble est formée d'une partie médiane (MT) rectangulaire et susceptible d'être enroulée, et de parties (KT) coniques s'y raccordant latéralement.

**24.** Manchon de câble rétractable suivant la revendication 23, caractérisé en ce que les parties coniques (KT) sont attachées à la partie médiane (MT) par des languettes de liaison (VL).

**25.** Manchon de câble rétractable suivant l'une des revendications 1 à 20, caractérisé en ce que la doublure (KE) de manchon de câble est formée d'hémi-coguilles relativement stables.

**26.** Manchon de câble rétractable suivant l'une des revendications précédentes, caractérisé en ce que la doublure (KE) du manchon de câble comporte des crans (E) en forme de gorges s'étendant dans la direction longitudinale.

**27.** Manchon de câble rétractable suivant l'une des revendications précédentes, caractérisé en ce que la feuille de base (GF) est constituée d'une feuille tissée en toile d'aluminium.

**28.** Manchon de câble rétractable suivant l'une des revendications 1 à 26, caractérisé en ce que la feuille de base (GF) est constituée d'une feuille en matière plastique plaquée d'aluminium.

**29.** Manchon de câble rétractable suivant l'une des revendications précédentes, caractérisé en ce qu'une feuille de recouvrement, de préférence en Hostaphan, est appliquée de manière à recouvrir entièrement la doublure (KE) du manchon de câble.

**30.** Manchon de câble rétractable suivant l'une des revendications 1 à 28, caractérisé en ce qu'une feuille de recouvrement, de préférence en Hostaphan, est disposée dans des zones partielles de la doublure (KE) du manchon de câble.

**31.** Manchon de câble rétractable suivant l'une des revendications 1 à 28, caractérisé en ce qu'il est prévu une feuille de recouvrement en matériau résistant peu de temps à l'action de la chaleur.

**32.** Manchon de câble rétractable suivant l'une des revendications 1 à 22 ou 26 à 31, caractérisé en ce que les parties coniques latérales d'adaptation de la doublure (KE) du manchon de câble sont formées par les parties marginales du composite stratifié de la doublure (KE) du manchon de câble.

33. Manchon de câble rétractable suivant l'une des revendications 1 à 22 ou 26 à 31, caractérisé en ce que des pièces d'adaptation coniques distinctes sont issues de la partie médiane de la doublure (KE) de manchon de câble.

34. Procédé de montage d'un manchon de câble suivant l'une des revendications précédentes, caractérisé,

en ce qu'il consiste à découper la doublure (KE) intérieure du manchon de câble dans un composite stratifié fabriqué sous forme de bande, à la dimension longitudinale dont on a besoin et pour le diamètre qui est nécessaire, à enrouler ensuite cette partie découpée sur l'objet à protéger, à mettre ensuite dessus une gaine rétractable et à réunir ensuite par fusion, par apport de chaleur, les couches (IS, SE) susceptibles d'être activées de la gaine (SH) rétractable et de la doublure (KE) du manchon de câble.

# FIG 1

SH

IS

KE { SE
VS
GF

K

# FIG 2

SE
VS
GF

KE

# FIG 3

VS
SE
GF

KE

# FIG 4

SE/VS

GF
ZF

KE

**FIG 5**

**FIG 6**

**FIG 7**

**FIG 8**

FIG 9

FIG 10

FIG 11

FIG 12